# EUROPÄISCHE PATENTANMELDUNG

(11) **EP 1 072 474 A2**
(43) Veröffentlichungstag der Anmeldung: **31.01.2001**
(21) Anmeldenummer: 00112660.6
(22) Anmeldetag: 15.06.2000
(51) Int. Cl.: B60R 11/02

(54) **Fahrzeug-Audiosystem**

(30) Priorität: 28.07.1999 DE 19935238
(71) Anmelder: DaimlerChrysler AG, 70567 Stuttgart (DE)
(72) Erfinder: Albus, Rainer, 72358 Dormettingen (DE); Bauer, Adel, 71634 Ludwigsburg (DE); Niemczyk, Norbert, 75180 Pforzheim (DE)

(57) **Zusammenfassung**

Die Erfindung bezieht sich auf ein Fahrzeug-Audiosystem mit einer Audio-Zentraleinheit, mit der eine oder mehrere weitere Audiokomponenten über einen zugehörigen ersten Datenbus verbunden sind, sowie mit Schnittstellenmitteln zur Datenkommunikation zwischen dem ersten Datenbus und einem zweiten fahrzeugseitigen Datenbus anderen Typs.

Erfindungsgemäß ist eine der Audiokomponenten eine die Schnittstellenmittel beinhaltende Audio-Gatewayeinheit, die ein eigenständiges Bauteil separat von der Audio-Zentraleinheit bildet und in der außer der Datenbus-Gatewayfunktionalität eine oder mehrere weitere fahrzeugtyp- und/oder länderübergreifend einheitliche Audiofunktionalitäten und/oder eine oder mehrere weitere Audiofunktionalitäten fahrzeugtyp- und/oder länderspezifisch parametrisierbar implement sind.

Verwendung z.B. in Automobilen.

## Beschreibung

Die Erfindung bezieht sich auf ein Fahrzeug-Audiosystem mit einer Audio-Zentraleinheit, mit der eine oder mehrere weitere Audiokomponenten über einen zugehörigen ersten Datenbus miteinander verbunden sind, sowie mit Schnittstellenmitteln zur Datenkommunikation zwischen dem ersten Datenbus und einem zweiten fahrzeugseitigen Datenbus anderen Typs.

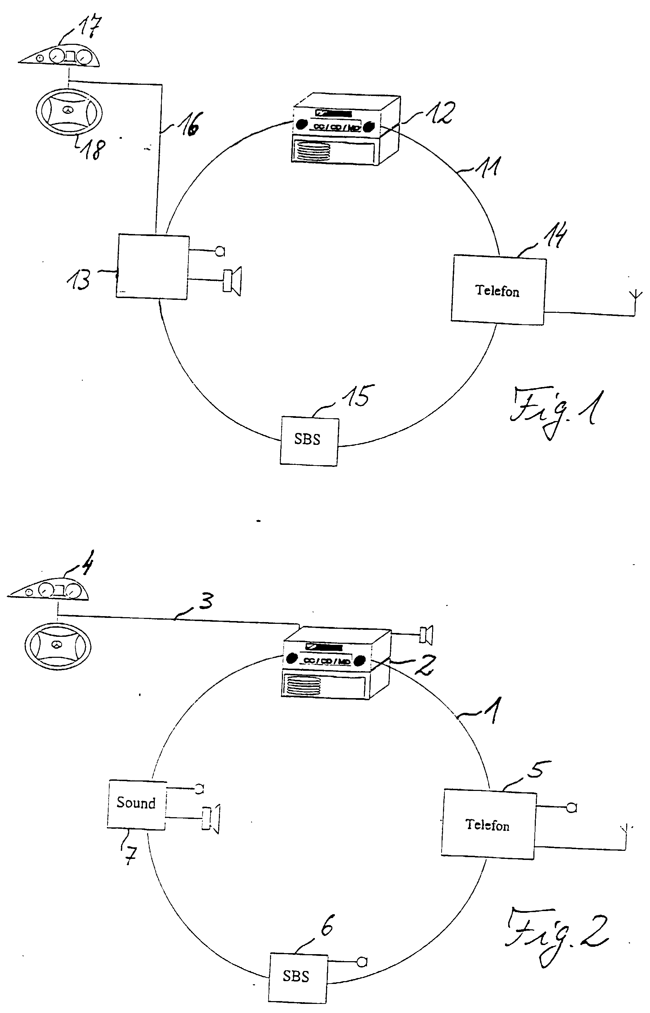

Neben anderen bekannten Auslegungen von Fahrzeug-Audiosystemen, z.B. einer in der Veröffentlichung H.Tajima et al., A Distributed Architecture Car Audio System, Transportation Electronics: Proceedings of the International Congress on Transportation Electronics, Warrendale, PA, USA, SAE, Oktober 1986, Seite 85 beschriebenen verteilten Systemarchitektur, ist aus Fahrzeugen der Anmelderin ein Fahrzeug-Audiosystem der eingangs genannten Art bekannt, wie es schematisch in Fig. 2 dargestellt ist.

Wie aus Fig. 2 erkennbar, beinhaltet dieses Audiosystem einen optischen Ring-Datenbus 1 z.B. des unter der Abkürzung MOST gelaufigen Typs, über den mehrere Audiokomponenten miteinander in Verbindung stehen. Eine davon bildet eine Audio-Zentraleinheit 2, auch Head-Unit genannt, in die zahlreiche Funktionalitäten implementiert sind, wie Benutzerschnittstellen-Steuerung, Busmasterfunktion, Prioritätenmanagement, Diagnosefunktion, Radio- und Verstärkerfunktion etc. Zudem beinhaltet diese herkömmliche Zentraleinheit 2 die Schnittstellenmittel zur Datenkommunikation zwischen dem Audio-Datenbus 1 und einem zweiten fahrzeugseitigen Datenbus 3, z.B. einem unter der Abkürzung CAN-B geläufigen Datenbus, über den diverse Fahrzeugsteuergeräte miteinander vernetzt sind. Über den zweiten Datenbus 3 hat die Audio-Zentraleinheit 2 Zugriff auf ein Kombiinstrument 4, insbesondere für Anzeigezwecke, sowie auf die übrige "Fahrzeugsteuergerätewelt" z.B. zur Realisierung einer Diagnosefunktion und einer Multifunktionslenkradfunktion, bei der am Lenkrad eine oder mehrere Audiofunktionen vom Systemnutzer angesteuert werden können. Von der Audio-Zentraleinheit 2 werden die weiteren vorhandenen Audiokomponenten gesteuert, im gezeigten Beispiel eine Autotelefoneinheit 5, ein Sprachbediensystem 6 und ein Soundsystem 7, das eine komforterhöhende Aufrüstung eines Standardsystems darstellt.

Das Gesamtaufgabenfeld der herkömmlichen Audio-Zentraleinheit 2 ist folglich sehr umfangreich und komplex, wobei für verschiedene Fahrzeugtypen und Einsatzländer wenigstens ein Teil dieser Funktionalitäten fahrzeugtyp- und/oder länderspezifisch unterschiedlich ist. Hinzu kommt, daß die jeweilige Audiokomponente oftmals von verschiedenen Komponentenherstellern für unterschiedliche Fahrzeugtypen, worunter vorliegend auch unterschiedliche Baureihen verstanden werden sollen, und/oder für unterschiedliche Länder geliefert werden, wodurch die Produktionsstückzahl jeder einzelnen Variante sinkt, auch und gerade bezüglich der herkömmlichen Audio-Zentraleinheit 2. Als weitere Auswirkung ist ein relativ hoher Testaufwand für das jeweilige Audiosystem erforderlich. Ein weiterer Problempunkt des herkömmlichen Systems ist die unterschiedliche Anbindung der Lautsprecheranlage. In einer Standardauslegung sind Lautsprecher direkt an der Zentraleinheit kontaktiert, während bei einer komforterhöhenden Auslegung mit dem Soundsystem 7 die Lautsprecher dort angeschlossen sind und in diesem Fall die Endstufen der Zentraleinheit 2 redundant sind und ungenutzt bleiben. Für zukünftige Standardsysteme sind die heutzutage verwendeten vier Endstufen voraussichtlich nicht mehr ausreichend; eine Erweiterung auf mehr Endstufen ist in der Zentraleinheit 2 aus technischen Gründen sehr schwierig oder nicht realisierbar.

Der Erfindung liegt als technisches Problem die Bereitstellung eines Fahrzeug-Audiosystems der eingangs genannten Art zugrunde, das mit vergleichsweise geringem Aufwand für unterschiedliche Fahrzeugtypen sowie Einsatzländer verwendbar ist.

Die Erfindung löst dieses Problem durch die Bereitstellung eines Fahrzeug-Audiosystems mit den Merkmalen des Anspruchs 1. Bei diesem System ist charakteristischerweise eine Audio-Gatewayeinheit als ein von der Audio-Zentraleinheit separiertes Bauteil vorgesehen, das nicht nur als Schnittstelle zur Datenkommunikation zwischen dem Audio-Datenbus und dem weiteren fahrzeugseitigen Datenbus anderen Typs fungiert, sondern in das darüber hinaus eine oder mehrere weitere Funktionalitäten implementiert sind. Bei diesen handelt es sich um solche, die für verschiedene Fahrzeugtypen und/oder Einsatzländer einheitlich sind, oder um solche, die in der Audio-Gatewayeinheit fahrzeugtyp- und/ oder länderspezifisch parametrisierbar und damit an den jeweiligen Fahrzeugtyp bzw. das jeweilige Einsatzland anpaßbar sind.

Auf diese Weise kann die Audio-Zentraleinheit von diesen Funktionalitäten befreit ausgelegt werden, was deren Komplexität gegenüber dem oben anhand von Fig. 2 beschriebenen, herkömmlichen System deutlich reduziert. Diese Reduktion an von der Audio-Zentraleinheit zu bewältigenden Funktionalitäten hat im allgemeinen zur Folge, daß weniger unterschiedliche Varianten der Audio-Zentraleinheit für die verschiedenen Fahrzeugtypen und Einsatzländer erforderlich sind. Durch Implementierung einer Lautsprecherendstufen-Funktionalität in der Audio-Gatewayeinheit zusammen mit einer Soundsystemfunktionalität läßt sich die Audio-Zentraleinheit ohne eine solche Endstufe auslegen, so daß vermieden wird, daß selbige gegebenenfalls ungenutzt bleibt. Soweit fahrzeugtyp- und/oder länderübergreifend einheitliche Funktionalitäten betroffen sind, ist eine einheitliche Auslegung der Audio-Gatewayeinheit für alle Fahrzeugtypen und Einsatzländer verwendbar. Soweit die fahrzeugtyp- und/oder länderspezifisch parametrisierbaren Funktionalitäten betroffen sind, kann die Audio-Gatewayeinheit durch entsprechende Parametrisierung und damit relativ einfach ohne Notwendigkeit einer großen Variantenvielfalt an den jeweils vorliegenden Fahrzeugtyp bzw. das vorliegende Einsatzland angepaßt werden.

Bei einem nach Anspruch 2 weitergebildeten System sind in der Audio-Gatewayeinheit eine oder mehrere der Funktionalitäten "Verstärker", "Tuner", "Busmaster" und "Warntonmanagement" implementiert, so daß die zugehörige Audio-Zentraleinheit die betreffende Funktionalität nicht enthalten braucht.

Eine vorteilhafte Ausführungsform der Erfindung sowie das zu deren besserem Verständnis oben erläuterte, herkömmliche Audiosystem sind in den Zeichnungen dargestellt, in denen zeigen:
- Fig. 1: ein schematisches Blockdiagramm eines erfindungsgemäßen Fahrzeug-Audiosystems und
- Fig. 2: ein schematisches Blockdiagramm eines herkömmlichen Fahrzeug-Audiosystems.

Das in Fig. 1 schematisch dargestellte Fahrzeug-Audiosystem beinhaltet einen Audio-Datenbus 11 in Ringstruktur, z.B. in Form eines MOST-Ringbuses, über den eine Audio-Zentraleinheit 12, eine Audio-Gatewayeinheit 13, eine Autotelefoneinheit 14 und eine Sprachbediensystemeinheit 15 miteinander verbunden sind.

Verglichen mit dem herkömmlichen System von Fig. 2 kommt die Audio-Zentraleinheit 12 des erfindungsgemäßen Systems mit deutlich geringerer Funktionskomplexität aus. Sie dient wie die herkömmliche Zentraleinheit 2 als Frontend und zur Benutzerschnittstellen(MMI)-Steuerung, ist jedoch im übrigen weitestgehend frei von den Audio-Funktionalitäten der herkömmlichen Zentraleinheit 2. Diese weiteren Funktionalitäten sind beim erfindungsgemäßen System in der Audio-Gatewayeinheit 13 implementiert, die als eigenständiges Bauteil zusätzlich zur funktionsreduzierten Audio-Zentraleinheit 12 vorgesehen ist.

Die Audio-Gatewayeinheit 13 bildet zum einen die Gateway-Schnittstelle zwischen dem Audio-Datenbus 11 und einem weiteren fahrzeugseitigen Datenbus 16, beispielsweise einem solchen des Typs CAN-B, über den das Audiosystem mit der übrigen "Fahrzeugwelt" in Verbindung steht, insbesondere mit einem hauptsächlich für Anzeigefunktionen genutzten Kombiinstrument 17, einem Multifunktionslenkrad 18 und diagnoserelevanten Fahrzeugkomponenten sowie Warntonanforderungsmitteln. Die in der Audio-Gatewayeinheit 13 neben dieser Schnittstellenfunktion implementierten weiteren Funktionalitäten sind für verschiedene Fahrzeugtypen, einschließlich verschiedene Fahrzeugbaureihen, und/oder verschiedene Einsatzländer gleichbleibend und damit einheitlich, ohne einer fahrzeugtyp- bzw. länderspezifischen Anpassung zu bedürfen, oder sie sind fahrzeugtyp- und/oder länderspezifisch in der Audio-Gatewayeinheit 13 parametrisierbar abgelegt und können folglich mittels entsprechender Parametrisierung angepaßt werden.

Auf diese Weise realisiert die Audio-Gatewayeinheit 13 eine fahrzeugtyp- und länderübergreifende Komponente des Audiosystems, in der je nach Anwendungsfall und Bedarf eine oder mehrere der folgenden Funktionalitäten enthalten sind. Erstens ist vorzugsweise eine Verstärkerfunktion mit Lautsprecheranbindung implementiert, die sowohl für ein Standard- als auch für ein Soundsystem verwendbar ist, so daß die Audio-Zentraleinheit 12 ohne Verstärker auskommt. Zweitens fungiert die Audio-Gatewayeinheit 13 mit ihrer Schnittstellenfunktion zur Bereitstellung eines Datenaustauschs mit dem Kombiinstrument 17, dem Multifunktionslenkrad 18, für Diagnosezwecke und zum Austausch von Informationen mit audio-relevanten standardisierten Klemmen der Fahrzeugelektrik. Drittens kann in der Audio-Gatewayeinheit 13 ein zentrales Warntonmanagement integriert sein, was aufgrund der Tatsache besonders vorteilhaft ist, daß über die Audio-Gatewayeinheit 13 eine direkte Anbindung an die "Fahrzeugwelt", d.h. die übrige Fahrzeugelektrik, und ein direkter Lautsprecheranschluß realisiert werden kann. Viertens ist vorzugsweise eine Diagnosefunktion zur Durchführung von Offboard-Diagnosen vorgesehen. Fünftens kan als weitere Option eine Busmasterfunktion für das Netzwerkmanagement in der Audio-Gatewayeinheit 13 implementiert sein. Als sechste Funktionalität können Applikationen zum Hochfahren und Herunterfahren der im Audiosystem enthaltenen Telematikkomponenten vorgesehen sein. Eine siebte Funktionalität betrifft die Realisierung einer zentralen Verwaltung der Ressourcen, d.h. insbesondere der Kapazität der Datenübertragungskanäle. Achtens ist bevorzugt, wie oben erwähnt, eine zentrale Lautsprecheranbindung von der Audio-Gatewayeinheit 13 aus möglich. Als neunte Funktionalität ist die Möglichkeit zu erwähnen, einen Subwoofer sowohl für ein Standard- wie auch für ein Soundsystem über die Audio-Gatewayeinheit 13 flexibel anbinden zu können. Als zehnte Funktionscharakteristik kann die Anbindung nicht nur eines, sondern mehrerer Mikrofone an die Audio-Gatewayeinheit 13 vorgesehen sein, z.B. für eine Soundapplikation "Geräuschreduktion", einen Telefon-Freisprechmodus und für das Sprachbediensystem 15. Als elfte Funktionalität sei erwähnt, die Tunerfunktion in der Audio-Gatewayeinheit 13 zu implementieren.

Durch das Bereitstellen der von der Audio-Zentraleinheit 12 separaten Audio-Gatewayeinheit 13 mit den oben erwähnten Funktionsmöglichkeiten lassen sich insbesondere folgende Vorteile verglichen mit dem herkömmlichen System von Fig. 2 realisieren.

Die Komplexität des Audiosystems und insbesondere der Audio-Zentraleinheit wird reduziert. Hersteller bzw. Zulieferer der Einzelkomponenten des Audiosystems benötigen nicht das gesamte Wissen über das System, sondern nur über Einzelfunktionen. Die länder- und fahrzeugtypübergreifende Verwendung von Standardkomponenten des Systems reduziert den Entwicklungs- und Testaufwand sowohl beim Fahrzeug- wie auch beim Komponentenhersteller. Durch das zentrale Warntonmanagement können Warntöne ohne weitere Verzögerung schnell generiert werden, und zwar je nach Bedarf vorn, hinten, links und rechts am Fahrzeug und auch bei einem Datenbus-Ringausfall. Die Verwendung einer GAL(geschwindigkeitsabhängige Lautstärke)-Funktion ist nicht erforderlich, es kann gleich eine höherwertige DRO-Funktion wie beim Soundsystem verwendet werden. Eine digitale Verarbeitung der Audiodaten kann bereits beim Standardsystem Verwendung finden. Durch die Verarbeitung der Mikrofonsignale an zentraler Stelle in der Audio-Gatewayeinheit läßt sich eine bessere Telefon- und Sprachbediensystem-Qualität erreichen. Im Fertigungsprozeß können Testschritte, wie z.B. der Test der Lautsprecher über das Mikrofon, automatisiert werden. Die Sonderausstattung "Soundsystem" kann mittels einfachem Austausch der Audio-Gatewayeinheit durch ein solches mit entsprechend höherwertiger Ausstattung einfach nachgerüstet werden. Die Temperatur- und Verkabelungssituation im Fahrzeugtunnel-Dombereich kann ohne Probleme unkritisch gehalten werden, und es können einheitliche Steckerkonzepte zur Anwendung kommen. Eine Diebstahlschutzfunktion ist in der Audio-Zentraleinheit nicht erforderlich, da in der Minimalkonfiguration mindestens zwei Komponenten zur Ausführung der Grundfunktionen notwendig sind, nämlich neben der Audio-Zentraleinheit die Audio-Gatewayeinheit. Die vorzugsweise im besagten Dombereich verbaute Audio-Zentraleinheit läßt sich wegen ihrer geringeren Komplexität und der damit entspannten Schnittstellenfunktionalität relativ einfach an die gegebenen Verhältnisse anpassen. Über die Audio-Gatewayeinheit ist zudem die heutzutage gewählte Anzahl von Verstärker-Endstufen problemlos erweiterbar.

## Patentansprüche

1. Fahrzeug-Audiosystem mit
- einer Audio-Zentraleinheit (12), mit der eine oder mehrere weitere Audiokomponenten (14, 15) über einen zugehörigen ersten Datenbus (11) verbunden sind, und
- Schnittstellenmittel zur Datenkommunikation zwischen dem ersten Datenbus und einem zweiten fahrzeugseitigen Datenbus (16) anderen Typs,
**dadurch gekennzeichnet, daß**
- eine der Audiokomponenten eine die Schnittstellenmittel beinhaltende Audio-Gatewayeinheit (13) ist, die ein eigenständiges Bauteil separat von der Audio-Zentraleinheit (12) bildet und in der außer der Datenbus-Gatewayfunktionalität eine oder mehrere weitere fahrzeugtyp- und/oder länderübergreifend einheitliche Audiofunktionalitäten und/oder eine oder mehrere weitere Audiofunktionalitäten fahrzeugtyp- und/oder länderspezifisch parametrisierbar implement sind.

2. Fahrzeug-Audiosystem nach Anspruch 1, weiter
**dadurch gekennzeichnet, daß**
in der Audio-Gatewayeinheit (13) wenigstens eine Verstärker-Funktionalität, eine Tuner-Funktionalität, eine Busmaster-Funktionalität und/oder eine Warntonmanagement-Funktionalität implementiert sind.
